# EUROPEAN PATENT SPECIFICATION

(11) **EP 1 443 002 B1**
(45) Date of publication and mention of the grant of the patent: **08.08.2007**
(21) Application number: 04075307.1
(22) Date of filing: 02.02.2004
(51) Int. Cl.: B65G 1/137

(54) **Order picking installation for collecting products in collecting containers**
Kommissionieranlage zur Sammelung von Produkten in Behältern
Installation de préparation de commandes pour collecter des produits dans des conteneurs

(30) Priority: 03.02.2003 NL 1022559
(43) Date of publication of application: 04.08.2004
(73) Proprietor: VANDERLANDE INDUSTRIES NEDERLAND B.V., 5466 RB Veghel (NL)
(72) Inventor: Dumoulin, Bastiaan Maria Ludovicus, 5247WT Rosmalen (NL); Krähe, Ulrich, 41238 Mönchengladbach (DE)
(74) Representative: Dorna, Peter

(56) References cited:
- EP-A- 0 847 939
- WO-A-03/008306
- US-A1- 2002 021 954
- PATENT ABSTRACTS OF JAPAN vol. 012, no. 116 (M-684), 13 April 1988 (1988-04-13) & JP 62 244807 A (TSUBAKIMOTO CHAIN CO), 26 October 1987 (1987-10-26)

## Description

The invention relates to an installation for collecting products in collecting containers, which installation comprises a storage rack comprising rack positions disposed beside and above one another for accommodating said products, as well as a conveying system comprising a conveyor for the collecting containers which extends along a conveying path, said conveying path comprising a main conveying path and at least one fixed branch conveying path extending from said main conveying path, which branch conveying path comprises at least one fixed collecting location disposed near the storage rack for placement of at least one product into a collecting container at the collecting location from a number of rack positions located near said collecting location. Such installations are known, they are used in the field of logistics for so-called "order picking", more specifically "zone picking". In the rack position, the products may be present in containers referred to as distribution containers, which may be identical in construction to collecting containers, but this is not absolutely necessary within the framework of the invention.

An installation as referred to in the introduction is known from European patent EP 0 847 939 B1. Said installation is conform to the preamble of claim 1 and comprises two storage racks extending parallel to each other, with a floor for personnel present therebetween. A first storage rack is provided with downwardly inclined roller conveyors at three vertical levels, which roller conveyors extend beyond the uprights of the rack on the side of the floor at their bottom ends. Present on the roller conveyors are containers which accommodate various products. The second storage rack likewise comprises downwardly inclined roller conveyors at two vertical levels corresponding to the lower level and the upper vertical level of the first storage rack, which roller conveyors likewise extend beyond the uprights of the second storage rack on the side of the floor. A main conveyor for transporting containers extends within the second storage rack, parallel thereto, between the two levels of the roller conveyors of the second storage rack. The containers can be moved in lateral direction to a branch conveyor which extends parallel to the main conveyor outside the storage rack between the lower ends of the roller conveyors at different vertical levels. The containers can be stopped on the branch conveyor, whereupon personnel can place products present in the various containers on the inclined roller conveyors of both the first and the second storage rack into the stationary container.

An important drawback of the installation according to EP 0 847 939 B1 is the fact that it is not possible to use so-called pallet locations on the side of the second storage rack because of the presence of the main conveyor and the branch conveyors at that location. When pallet locations are used, products are presented on a pallet in order to be transferred from said pallet to a container on the branch conveyor. The pallets may also be present on downwardly inclined roller conveyors. On account of the weight, the manageability and the accessibility of products on the pallet, the pallet is positioned approximately at the level of the feet of a worker, who removes products from the pallet and places them into a container. The height which a pallet location requires is about two metres, with the level at which products are positioned decreasing as more products are being removed from the pallet, until the pallet is empty and is replaced by a new filled pallet. The object of the invention is to provide, whether or not in a preferred embodiment thereof, an installation by means of which it is possible to use pallet locations even on the side of a storage rack where a collecting location is present.

In order to facilitate the collecting of products in containers it is known to use so-called pick-to-light (PTL) technology, wherein a light goes on at the containers on the inclined roller conveyors from where products are to be placed into the container on the branch conveyor, which light stays on until the product in question has been removed by a staff member in order to be placed into the container on the branch conveyor. This PTL technology has effected a major productivity increase over the past years. In connection therewith, the walking distance for staff members between the products, which may or may not be present in containers, on the inclined roller conveyors and the stationary container on the parallel branch conveyor has become increasingly important in regard of the productivity that is achieved. The object of the invention is to minimise said walking distance and, in connection therewith, offer a maximum density of rack positions from where products can be placed into a collecting container at the collecting location, and to reduce the amount of space that is taken up by an installation.

The invention furthermore relates to an installation for collecting products in collecting containers, which installation comprises a storage rack comprising rack positions disposed beside and above one another for accommodating said collecting containers, as well as a conveying system comprising a conveyor for the products that may be present in distribution containers, said conveying path comprising a main conveying path and at least one fixed branch conveying path extending from said main conveying path, which branch conveying path comprises at least one fixed distribution location disposed near the storage rack for placement of a product from the conveyor into one of a number of collecting containers at the distribution location, which collecting containers are accommodated in one of a number of rack positions near said distribution location. The products may be present in a distribution container on the branch conveyor, but this is not absolutely necessary within the framework of the invention.

Installations of this kind are used in the so-called "put-to-order" process, wherein it is not the collecting container to be filled that is transported past the products in the rack positions but, just the reverse, it is the products that are moved past collecting containers in the rack positions. The problems as described above in relation to the "zone picking" process, in particular with regard to the object of achieving a maximum density of rack positions around a distribution location, also apply in this case, as will be apparent to those skilled in the art.

In WO-A1-03/008306 a "put-to-order" installation according to the preamble of claim 2 is being disclosed with a delivery inspection center comprising a shorting apparatus having a first sorting/conveying line and branching therefrom a second sorting/conveying line. The second sorting/conveying line runs horizontally between to segmenting zones with compartments for receiving articles taken from the second sorting/conveying line in buckets.

For a correct interpretation of the foregoing and the following it is important to make mention of the fact that within the framework of the present invention the rack positions of a storage rack are those positions from which products can be placed into a collecting container at the collecting location (zone picking) or those positions at which collecting containers are present for the purpose of being filled with products from the distribution location (put-to-order). Besides storage positions, a storage rack may also contain other positions, therefore, such as storage positions which are not intended either for placing products into a collecting container from said positions or for accommodating collecting containers that are to be filled.

The object of the invention is accomplished in the first place in that the installations according to claim 1 and claim 2 are characterized in that said branch conveying path extends at least partially in vertical direction. Since the branch conveying path extends at least partially in vertical direction, space can be made available for additional rack positions, resulting in a reduced average walking distance for an identical number of rack positions in comparison with prior art installations.

This advantage applies in particular if the branch conveying path extends in vertical direction towards the collecting location or the distribution location and/or from the collecting location or the distribution location and contiguous thereto.

A very advantageous embodiment is obtained if the main conveying path extends above or below the rack positions, at least directly before the position where the branch conveying path starts. This achieves that, in contrast to the prior art as e.g. formed by EP 0 847 939 B1, the main conveying path, or at least that part of the conveyor which extends along said path, does not take up any space that could in principle be very suitably used for rack positions. It should be realised in this regard that the main conveying path in general extends along the entire length of the storage rack, so that a significant number of storage positions is lost due to the presence of the main conveying path. In the present preferred embodiment, said space becomes available for the rack positions, which will further reduce the average walking distance between the rack positions and the collecting location or the distribution location.

A very suitable position for at least part of the conveying system is obtained if, according to a preferred embodiment, the conveying system, or at least the main conveying path thereof, extends under a floor which adjoins the storage rack. From said floor, workers can place products into collecting containers. Thus space under such a floor is not lost as an empty space, whilst in addition no space is taken up within the storage rack by the part in question of the conveying system.

Preferably, the length of the conveying system, seen in the longitudinal direction of the storage rack, is substantially equal to the dimension of two adjacent collecting containers or distribution containers, seen in the longitudinal direction of the storage rack, at least insofar as the branch conveying path extends within the common height of the rack positions. Think in this connection of the situation in which a single collecting container or distribution container or collecting containers is (are) supplied to the collecting location, or in which products, which may or may not be present in distribution containers, are supplied to the distribution location by the conveying system and is (are) discharged again within the length of the other collecting container or distribution container. Imagine a Paternoster-like movement, for example, in which the plane of the Paternoster movement extends parallel to the longitudinal direction of the storage rack. Alternatively it is possible to transport collecting containers or distribution containers with products present therein in vertical direction towards and away from two separate collecting locations or distribution locations within two separate lengths of collecting containers or distribution containers, and that in an alternating manner, so that filling of a collecting container with products from the rack positions can take place continuously at either one of the two collecting locations or products can continuously be placed into collecting containers on the rack positions from either one of the two distribution locations.

A further reduction of the amount of space taken up by the conveying system, so that more space will become available for rack positions, is achieved if the length of the conveying system, seen in the longitudinal direction of the storage rack, is substantially equal to the dimension of a single collecting container or distribution container, seen in the longitudinal direction of the storage rack, at least insofar as the branch conveying path extends within the common height of the rack positions. Think of a "zone-pick" situation, for example, in which collecting containers are supplied to the collecting location in a first vertical direction within the length of a single collecting container and, after being filled, are discharged in a second direction of transport within the same length. Said second direction of transport may be opposed to the first direction of transport. The parts of the branch conveying paths towards the collecting location and away from the collecting location may spatially coincide or extend parallel to each other. In the latter situation a Paternoster-like configuration would be used again, in which situation the plane of the Paternoster movement extends perpendicularly to the longitudinal direction of the storage rack, however. According to another possibility, the first direction of transport and the second direction of transport are identical, in which case the container is not returned to the main conveyor after being filled at the collecting location, but to another conveyor present on the side of the rack positions opposite the main conveyor. Similar arrangements are also conceivable for a "put-to-order" environment, as will be apparent from the foregoing to those skilled in the art.

Insofar as mention is made of a Paternoster movement in the foregoing, it is noted that this term is merely understood to mean a path of movement comprising a first vertical movement and a second vertical movement, which extends parallel to said first vertical movement, but which does not coincide therewith, in a direction opposed to the direction of the first vertical movement. Furthermore it is not excluded that an accumulation of collecting containers or products, whether or not contained in distribution containers, takes place during the Paternoster movement, especially during the first vertical movement. It will be apparent that the collecting location or the distribution location is located at the final point of the first vertical movement or at the starting point of the second vertical movement.

Preferably, the conveying system extends within the plane of the rack positions, at least insofar as the branch conveying path extends within the common height of the rack positions, in order to achieve a maximum density of rack positions around the collecting location or the distribution location.

Another preferred embodiment of an installation according to the invention, which is less advantageous than the preceding preferred embodiments in most cases, but still more advantageous than an installation according to the prior art, is characterized in that the conveying system is adjacent to the plane of the rack positions, at least insofar as the branch conveying path extends within the common height of the rack positions.

According to another preferred embodiment, the branch conveying path connects to the main conveying path again at a point past the collecting location or the distribution location.

Alternatively, the branch conveying path may connect to a further main conveying path at a point past the collecting location or the distribution location.

In order to effect an optimally continuous supply of collecting containers to be filled or products to be distributed at the collecting location or the distribution location, respectively, and realise a further productivity increase in this manner, the branch conveying path preferably comprises at least two sub-branch conveying paths, which each comprise a collecting location or a distribution location. Whilst a collecting container is being filled at a first collecting location in the case of a "zone-pick" situation, an already filled collecting container is discharged from the other collecting location and replaced by a collecting container that is to be filled at said collecting location. In the case of a "put-to-order" situation, a product is placed into a collecting container at a rack position from a first distribution location, whilst products present at the other distribution location are discharged and replaced by a new product that is to be placed into one of the collecting containers at the rack positions.

Such sub-branch conveying paths preferably extend parallel to each other, at least insofar as they connect to the collecting locations or the distribution locations. As a result, a minimum amount of space is taken up, whilst in addition the walking distance between the two collecting locations or between the two distribution locations practically amounts to zero, especially if the two locations are adjacent to each other.

The advantages of the invention apply in particular if the installation comprises a further storage rack opposite said storage rack, which further storage rack comprises further rack positions disposed beside and above each other, either for placing a product into a collecting container at the collecting location from said further rack positions near the collecting location, or for placing a product from the distribution location into a collecting container accommodated in a further rack position near the distribution location.

The invention will now be explained in more detail by means of a description of a number of preferred embodiments of an installation according to the invention for a "zone pick" situation. A person skilled in the art will immediately be able to infer from these preferred embodiments how these preferred embodiments can be used in a "put to order" situation as well, in which case in principle no adaptations, or at least not any significant ones, of the preferred embodiments are required.
Fig. 1 is a perspective view of a first installation according to the invention.
Fig. 2 is a vertical cross-sectional view of the installation of Fig. 1, or at least of a variant not significantly different therefrom.
Fig. 3 is a vertical cross-sectional view of a second embodiment of an installation according to the invention.
Fig. 4 is a vertical cross-sectional view of a third embodiment of an installation according to the invention.
Fig. 5 is a vertical cross-sectional view of a fourth embodiment of an installation according to the invention.
Fig. 6 is a view of a part of the fourth preferred embodiment in a plane perpendicular to the cross-section of Fig. 5.

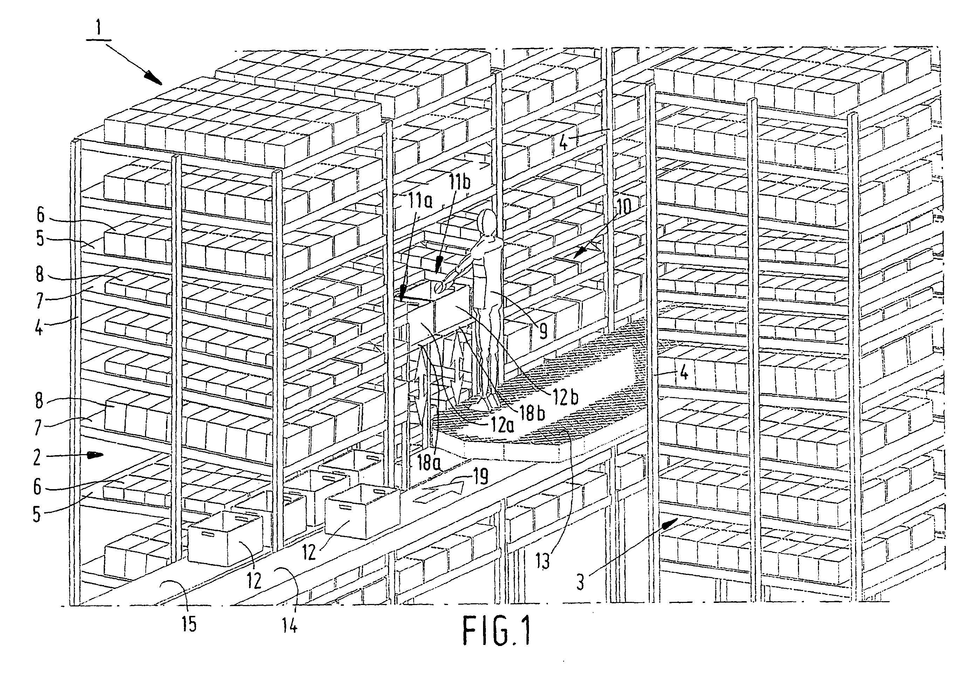

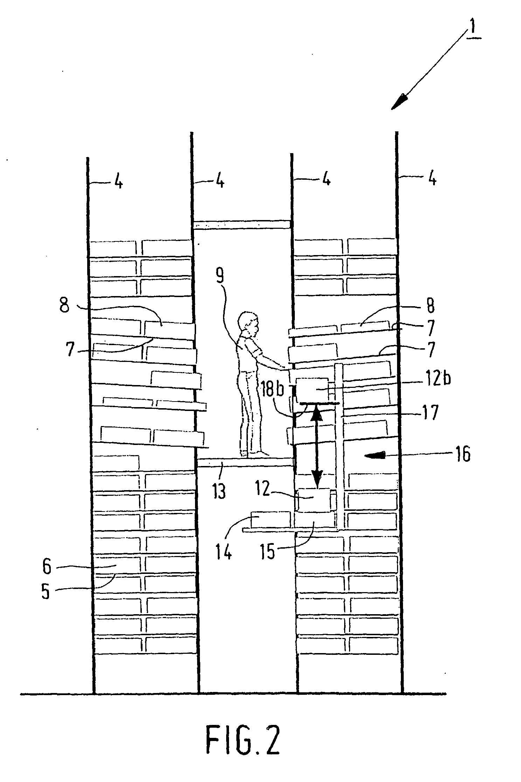

Figs. 1 and 2 show a part of a zone-pick installation 1, or at least of variants thereof that are not significantly different from each other. The installation 1 comprises two storage racks 2, 3 extending in a longitudinal direction. A typical length of such storage racks 2, 3 is usually a few dozen metres. The zone-pick installation 1 is divided into a number of zones along the length of the storage racks 2, 3. The storage racks 2, 3 comprise regularly spaced-apart uprights 4, which support supporting surfaces 5 for the storage of products 6 as well as downwardly inclined roller conveyors 7 for presenting products 8 present thereon to a worker 9. It is important to establish that the products 6 that are present on the supporting surfaces 5 are not intended for removal from the storage racks 2, 3 by the worker 9, unlike the products 8 that are present on the roller conveyors 7. The length of the zone equals the distance between six uprights 4, seen in the longitudinal direction of the storage racks 2, 3, a distance of approximately 10 metres.

Four rack positions arranged adjacently to each other are present between two adjacent uprights 4 at the lower end of each roller conveyor 7, seen in the longitudinal direction of the storage racks 2, 3, each rack position having a length amounting to one fourth the distance between two uprights 4, seen in the longitudinal direction of the storage racks 2, 3. A collecting station 10 is provided in the centre of the zone, on the side of the storage rack 2, at which station containers 12a, 12b are presented to the worker 9, in a manner yet to be explained, at two collecting locations 11a, 11b, which containers are to be filled by the worker 9 with products 8 present on the roller conveyors 7. It is noted in this connection that different types of products 8 may be concerned, and that it must not be concluded from the fact that these products are all indicated by the same reference numeral that one and the same product is concerned. Within the framework of the invention it is moreover possible for products 8 to be present on the roller conveyors 7 in a box-like container or in a different type of distribution container, or to be supported directly on the roller conveyors 7.

The worker 9 stands on a floor 13, which extends between two storage racks 2, 3 in the form of an aisle. Under the platform 13, an endless conveyor belt 14 extends the full length of the storage racks 2, 3 in the longitudinal direction of the storage racks 2, 3 on the side of the rack 2. A buffer conveyor belt 15, whose length is maximally equal to the length of the associated zone, extends between the uprights 4 of the storage rack 2, parallel to the conveyor belt 14. Alternatively, said conveyor belts may be substituted for roller conveyors, for example. Containers 12, which may or may not be partially filled already, can be moved sideways off the conveyor belt 14 to the buffer conveyor belt 15, by pusher means (not shown), before the containers 12 in question reach the longitudinal position of the collecting station 10. It is noted - unnecessarily - that the direction of transport of the conveyor belt 14 and the buffer conveyor belt 15 is the direction indicated by the arrow 19. Present at the end of the buffer conveyor belt 15 is a double lift facility 16 comprising a vertically operative guide system 17, along which lift platforms 18a, 18b can be moved in vertical direction independently of each other, adjacently and parallel to each other between a lower position present at the same vertical level as the buffer conveyor belt 15 and an upper position, at which containers 12a, 12b are present at a so-called collecting location 11a, 11b.

As soon as a container 12 arrives at a collecting location 11, it can be filled with products 8 by the worker 9. Within the framework of the invention, various options are conceivable for communicating to the worker 9 which specific products 8 are to be placed into the container 12. Think in this connection of the pick-to-light (PTL) technology as already described in the introduction, for example. According to another possibility, a list of the products 8 to be placed into the container 12 is present in the container 12 to be filled. After the container 12 has been filled with the required products 8 at the collecting station 10, the container 12 moves down along the longitudinal guide 17 again and is moved onto the main conveyor belt 14 again at that location as soon as sufficient space is available on the conveyor belt 14.

It is furthermore noted that the zone-pick installation 1 also comprises a control system (not shown), which makes it possible to have a container 12 follow a suitable route along the storage racks 2, 3 in dependence on the products 8 with which the container is to be filled, with the containers 12 either calling in at the successive collecting stations 10, by being pushed onto the associated buffer conveyor belt 15, or moving past said stations.

According to an alternative embodiment, it is also conceivable within the framework of the invention to use a Paternoster principle, in which a container 12 is moved vertically upwards at the end of the buffer conveyor belt 15 until it takes up the position of the container 12a that is shown in Fig. 1, from where it is moved in longitudinal direction to the position of the container 12b, which position is also the collecting location where the filling of the container in question takes place, after which the container is transported downwards and moved onto the main conveyor belt 14 again. In this variant the vertical Paternoster plane of movement extends parallel to the longitudinal direction of the storage racks 2, 3.

Alternatively, it is also possible for said vertical Paternoster plane to extend perpendicularly to the longitudinal direction of the storage racks 2, 3, wherein a container, after reaching the position of the container 12a in Fig. 1, is filled at that position (which position is the collecting location, therefore), after which the container 12 is moved sideways to the rear (i.e. away from the worker 9) over a distance which equals the width of the container 12, whereupon the container 12 can be moved vertically downwards and be transported to the main conveyor belt 14 again by suitable conveying means. The advantage of this latter variant is that more space becomes available for an inclined roller conveyor 7, so that more products 8 can be presented to the worker 9, as a result of which the average walking distance per product 8 between the products 8 and the collecting location 11 is reduced.

Said average walking distance is very small already in comparison with the prior art situation as described in the introduction. The main reason for this is the fact that neither the main conveyor belt 14 nor the buffer conveyor belt 15 takes up any space that might otherwise be taken up by inclined roller conveyors 7 or rack positions. Only the lift facility 16 locally takes up a (very) small amount of space, which space might also have been taken up by an inclined roller conveyors 7. The fact that this space is taken up is not very disadvantageous, however, considering the fact that in principle a (shorter) inclined roller conveyor may also be present on the side of the collecting location 11 remote from the worker 9, in which case the worker 9 can place products 8 present on said roller conveyor into the container 12 by reaching beyond the container 12 at the collecting location 11.

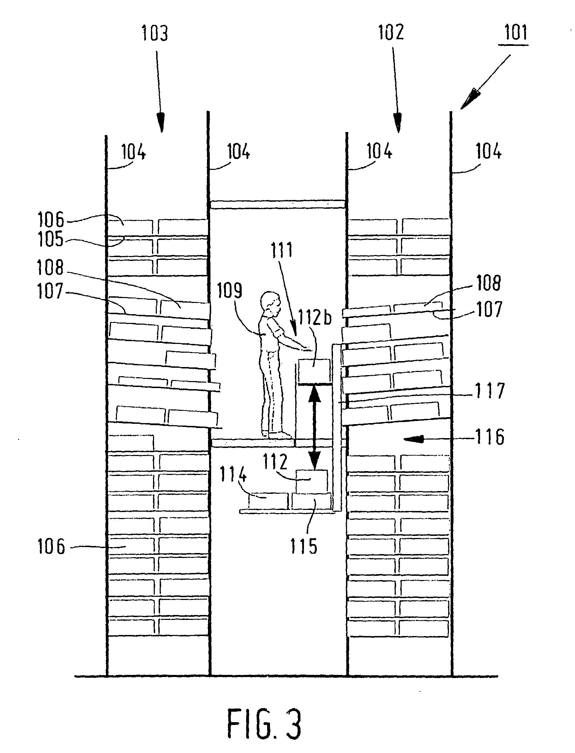

Figure 3 shows a second embodiment of an installation according to the invention, which second embodiment is a variant of the first embodiment and which shows a great deal of resemblance therewith. Corresponding or at least comparable parts are indicated by the same numerals, augmented by 100. A major difference between the first embodiment and the second embodiment is the fact that the lift facility 116 has been moved from a position within the storage rack 102 to a position just adjacent thereto. The advantage that is achieved in this manner is that the buffer conveyor belt 115 does not take up any space at the expense of the supporting surfaces 5 for the products 6, which was still the case in the first embodiment, albeit to a limited degree. The first embodiment as shown in Figs. 1 and 2, on the other hand, has this advantage that the spacing between the storage racks 2, 3 may be smaller than the spacing between the storage racks 102, 103 of the second embodiment, as a result of which the walking distances for the worker 9 will be smaller on average than those for the worker 109, whilst in addition the amount of space that the zone-pick installation 1 requires is smaller than the amount of space the zone-pick installation 101 requires, or, in other words, that the product density in the zone-pick installation 1 will be greater than the product density in the zone-pick installation 101.

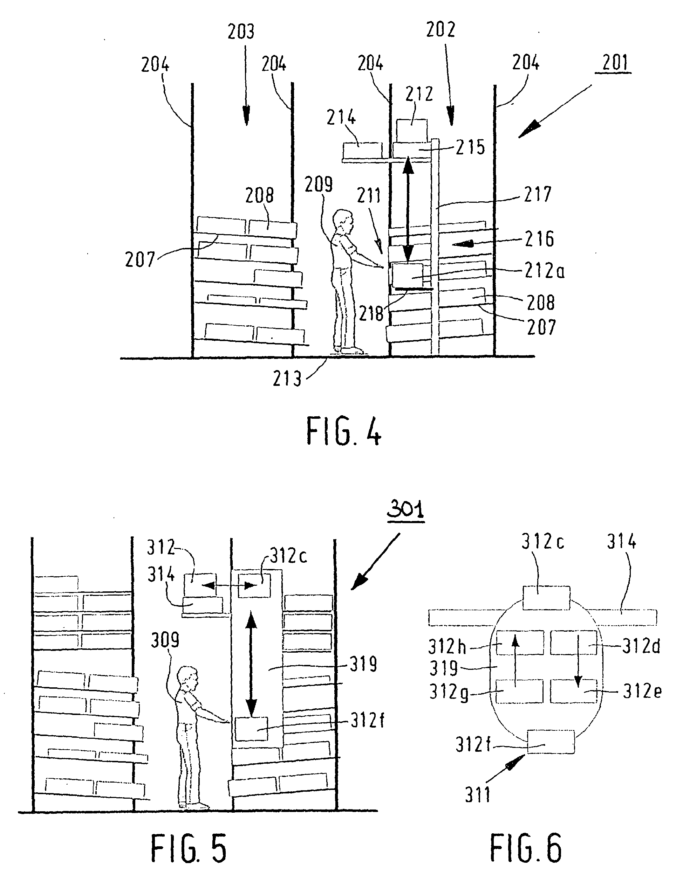

Fig. 4 shows a third preferred embodiment 201 of an installation according to the invention, which again shows a great deal of resemblance with the first and the second embodiment. Corresponding or at least comparable parts are therefore indicated by the same numerals, augmented by 200. The first embodiment and the third embodiment are different in that the storage racks 202 and 203 are not provided with supporting surfaces corresponding to the supporting surfaces 5 for the storage of products corresponding to the products 6, which is not essential within the framework of the present invention for that matter. The main conveyor belt 214 extends above the worker 209 instead of under the worker 209, which also applies as regards the buffer conveyor belt 215. The consequence of this is that a downward rather than an upward movement is necessary for reaching the collecting location 211 from the level of the buffer conveyor belts 215, whilst in addition an upward movement is logically required when returning from the collecting location 211 to the vertical level of the conveyor belt 214. Such an embodiment is in particular advantageous if insufficient space is available for certain facilities under the floor 213.

Figs. 5 and 6 show a fourth possible embodiment 301 of an installation according to the invention, which is a variant of the third embodiment that is shown in Fig. 4. Parts that correspond (at least substantially) two parts of the third embodiment of Fig. 4 are therefore indicated by the same numerals, augmented by 100. The main differences between the third embodiment as shown in Fig. 4 and the fourth embodiment as shown in Figs. 5 and 6 is the fact that the lift facility 216 has been substituted for a Paternoster system 319. The Paternoster system 319 can be filled with maximally six containers 312, which are moved from the main conveyor belt 314 onto the uppermost position (container 312c) of the Paternoster system 319, whereupon said container follows a circular path past the positions 312d, 312e, 313f, 312g, 312h and back to position 312c again, after which the container 312 is moved back onto the main conveyor belt 314 again. At the position 312f, which is the collecting location 311, the container 312 is filled by the worker 309.

According to another possible embodiment (not shown), the container is not returned to the main conveyor belt, unlike the container 12, 112, 212, 312 in the embodiments as shown, which container is returned to the main conveyor belt 14, 114, 214, 314 after being filled at the respective collecting locations 11a, 11b, 111, 211, 311, but instead it is carried further to another conveyor belt. In such an embodiment the direction of movement of the container towards the collecting location may be the same as the direction of movement of the container away from said collecting location, for example because the supply conveyor is positioned below the worker and the discharge conveyor is positioned above the worker.

## Claims

1. An installation (1; 101; 201; 301) for collecting products (8; 108; 208) in collecting containers (12; 112; 212; 312), which installation comprises a storage rack (2; 102; 202; 302) comprising rack positions disposed beside and above one another for accommodating said products, as well as a conveying system comprising a conveyor for the collecting containers which extends along a conveying path, said conveying path comprising a main conveying path (14; 114; 214 ; 314) and at least one fixed branch conveying path (15, 16; 115, 116; 215, 216; 319) extending from said main conveying path, which branch conveying path comprises at least one fixed collecting location (11; 111; 211; 311) disposed near the storage rack for placement of at least one product into a collecting container (12; 112; 212; 312) at the collecting location from a number of rack positions located near said collecting location, **characterized in that** said branch conveying path extends at least partially in vertical direction.

2. An installation for collecting products in collecting containers, which installation comprises a storage rack comprising rack positions disposed beside and above one another for accommodating said collecting containers, as well as a conveying system comprising a conveyor for the products that may be present in distribution containers, said conveying path comprising a main conveying path and at least one fixed branch conveying path extending from said main conveying path, which branch conveying path comprises at least one fixed distribution location disposed near the storage rack for placement of a product from the conveyor into one of a number of collecting containers at the distribution location, which collecting containers are accommodated in one of a number of rack positions near said distribution location, **characterized in that** said branch conveying path extends at least partially in vertical direction.

3. An installation according to claim 1 or 2, **characterized in that** the branch conveying path extends in vertical direction towards the collecting location or the distribution location and contiguous thereto.

4. An installation according to claim 1, 2 or 3, **characterized in that** the branch conveying path extends in vertical direction from the collecting location or the distribution location and contiguous thereto.

5. An installation according to any one of the preceding claims, **characterized in that** the main conveying path extends above or below the rack positions, at least directly before the position where the branch conveying path starts.

6. An installation according to any one of the preceding claims, **characterized in that** the conveying system, or at least the main conveying path thereof, extends under a floor which adjoins the storage rack.

7. An installation according to any one of the preceding claims, **characterized in that** the length of the conveying system, seen in the longitudinal direction of the storage rack, is substantially equal to the dimension of two adjacent collecting containers or distribution containers, seen in the longitudinal direction of the storage rack, at least insofar as the branch conveying path extends within the common height of the rack positions.

8. An installation according to any one of the preceding claims, **characterized in that** the length of the conveying system, seen in the longitudinal direction of the storage rack, is substantially equal to the dimension of a single collecting container or distribution container, seen in the longitudinal direction of the storage rack, at least insofar as the branch conveying path extends within the common height of the rack positions.

9. An installation according to any one of the preceding claims, **characterized in that** the conveying system extends within the plane of the rack positions, at least insofar as the branch conveying path extends within the common height of the rack positions.

10. An installation according to any one of the claims 1-8, **characterized in that** the conveying system is adjacent to the plane of the rack positions, at least insofar as the branch conveying path extends within the common height of the rack positions.

11. An installation according to any one of the preceding claims, **characterized in that** the branch conveying path connects to the main conveying path again at a point past the collecting location or the distribution location.

12. An installation according to any one of the claims 1-10, **characterized in that** the branch conveying path connects to a further main conveying path at a point past the collecting location or the distribution location.

13. An installation according to any one of the preceding claims, **characterized in that** the branch conveying path comprises at least two sub-branch conveying paths, which each comprise a collecting location or a distribution location.

14. An installation according to claim 13, **characterized in that** said sub-branch conveying paths extend parallel to each other, at least insofar as they connect to the collecting locations or the distribution locations.

15. An installation according to any one of the preceding claims, **characterized in that** the installation comprises a further storage rack opposite said storage rack, which further storage rack comprises further rack positions disposed beside and above each other, either for placing a product into a collecting container at the collecting location from said further rack positions near the collecting location, or for placing a product from the distribution location into a collecting container accommodated in a further rack position near the distribution location.

## Patentansprüche

1. Einrichtung (1, 101, 201, 301) zum Sammeln von Produkten (8, 108, 208) in Sammelbehältern (12, 112, 212, 312), wobei die Einrichtung ein Lagerregal (2, 102, 202, 302) umfasst, das Regalpositionen umfasst, die nebeneinander und übereinander zum Aufnehmen der Produkte angeordnet sind, sowie ein Fördersystem, das einen Förderer für die Sammelbehälter umfasst, welcher sich entlang einer Förderbahn erstreckt, wobei die Förderbahn eine Hauptförderbahn (14, 114, 214, 314) und mindestens eine feste Abzweigförderbahn (15, 16, 115, 116, 215, 216, 319), die sich von der Hauptförderbahn aus erstreckt, umfasst, wobei die Abzweigförderbahn mindestens eine feste Sammelstelle (11, 111, 211, 311) umfasst, die in der Nähe des Lagerregals, zur Unterbringung von mindestens einem Produkt in einem Sammelbehälter an der Sammelstelle aus einer Anzahl von Regalpositionen, die sich in der Nähe der Sammelstation befinden, angeordnet ist, **dadurch gekennzeichnet, dass** sich die Abzweigförderbahn wenigstens teilweise in vertikaler Richtung erstreckt.

2. Einrichtung zum Sammeln von Produkten in Sammelbehältern, wobei die Einrichtung ein Lagerregal umfasst, das Regalpositionen umfasst, die nebeneinander und übereinander zum Aufnehmen der Sammelbehälter angeordnet sind, sowie ein Fördersystem, das einen Förderer für die Produkte, die in den Verteilungsbehältern vorhanden sein können, umfasst, wobei die Förderbahn eine Hauptförderbahn und mindestens eine feste Abzweigförderbahn, die sich von der Hauptförderbahn aus erstreckt, umfasst, wobei die Abzweigförderbahn mindestens eine feste Verteilungsstelle umfasst, die in der Nähe des Lagerregals, zur Unterbringung eines Produktes von dem Förderer in einem aus einer Anzahl von Sammelbehältern an der Verteilungsstelle, angeordnet ist, wobei die Sammelbehälter in einer Anzahl von Regalpositionen in der Nähe der Verteilungsstelle aufgenommen sind, **dadurch gekennzeichnet, dass** sich die Abzweigförderbahn wenigstens teilweise in vertikaler Richtung erstreckt.

3. Einrichtung nach Anspruch 1 oder 2, **dadurch gekennzeichnet, dass** sich die Abzweigförderbahn in vertikaler Richtung in Richtung der Sammelstelle oder der Verteilungsstelle und benachbart dazu erstreckt.

4. Einrichtung nach Anspruch 1, 2 oder 3, **dadurch gekennzeichnet, dass** sich die Abzweigförderbahn in vertikaler Richtung von der Sammelstelle oder der Verteilungsstelle aus und benachbart dazu erstreckt.

5. Einrichtung nach einem der vorhergehenden Ansprüche, **dadurch gekennzeichnet, dass** sich die Hauptförderbahn über und unter die Regalpositionen erstreckt, zumindest direkt vor der Position, wo die Abzweigförderbahn beginnt.

6. Einrichtung nach einem der vorangehenden Ansprüche, **dadurch gekennzeichnet, dass** sich das Fördersystem, oder mindestens dessen Hauptförderbahn unter einen Fußboden erstreckt, der an das Lagerregal angrenzt.

7. Einrichtung nach einem der vorangehenden Ansprüche, **dadurch gekennzeichnet, dass** die Länge des Fördersystems, in Längsrichtung des Lagerregals gesehen, im Wesentlich gleich der Abmessung von zwei benachbarten Sammelbehältern oder Verteilungsbehältern, in Längsrichtung des Lagerregals gesehen, ist, zumindest insofern, als sich die Abzweigförderbahn innerhalb der üblichen Höhe der Regalpositionen erstreckt.

8. Einrichtung nach einem der vorangehenden Ansprüche, **dadurch gekennzeichnet, dass** die Länge des Fördersystems, in Längsrichtung des Lagerregals gesehen, im Wesentlichen gleich der Abmessung eines einzelnen Sammelbehälters oder Verteilerbehälters, in Längsrichtung des Lagerregals gesehen, ist, zumindest insofern, als sich die Abzweigförderbahn innerhalb der üblichen Höhe der Regalpositionen erstreckt.

9. Einrichtung nach einem der vorangehenden Ansprüche, **dadurch gekennzeichnet, dass** sich das Fördersystem innerhalb der Ebene der Lagerpositionen erstreckt, zumindest insofern, als sich die Abzweigförderbahn innerhalb der üblichen Höhe der Regalpositionen erstreckt.

10. Einrichtung nach einem der Ansprüche 1 bis 8, **dadurch gekennzeichnet, dass** das Fördersystem benachbart zu der Ebene der Regalpositionen ist, zumindest insofern, als sich die Abzweigförderbahn innerhalb der üblichen Höhe der Regalpositionen erstreckt.

11. Einrichtung nach einem der vorangehenden Ansprüche, **dadurch gekennzeichnet, dass** sich die Abzweigförderbahn mit der Hauptförderbahn wieder an einem Punkt nach der Sammelstelle oder der Verteilungsstelle verbindet.

12. Einrichtung nach einem der Ansprüche 1 bis 10, **dadurch gekennzeichnet, dass** sich die Abzweigförderbahn mit einer weiteren Hauptförderbahn an einem Punkt nach der Sammelstelle oder der Verteilungsstelle verbindet.

13. Einrichtung nach einem der vorangehenden Ansprüche, **dadurch gekennzeichnet, dass** die Abzweigförderbahn mindestens zwei Nebenabzweigförderbahnen umfasst, die beide eine Sammelstelle oder eine Verteilungsstelle umfassen.

14. Einrichtung nach Anspruch 13, **dadurch gekennzeichnet, dass** sich die Nebenabzweigförderbahnen parallel zueinander erstrecken, zumindest insofern, als sie sich mit den Sammelstellen oder den Verteilungsstellen verbinden.

15. Einrichtung nach einem der vorangehenden Ansprüche, **dadurch gekennzeichnet, dass** die Einrichtung ein weiteres Lagerregal gegenüber dem Lagerregal umfasst, wobei das weitere Lagerregal weitere Regalpositionen umfasst, die nebeneinander und übereinander angeordnet sind, entweder zum Unterbringen eines Produktes in einem Sammelbehälter an der Sammelstelle von den weiteren Regalpositionen in der Nähe der Sammelstelle, oder zum Unterbringen eines Produktes von der Verteilungsstelle in einem Sammelbehälter, der in einer weiteren Regalposition in der Nähe der Verteilungsstelle aufgenommen ist.

## Revendications

1. Installation (1 ;101 ; 201 ; 301) destinée au ramassage de produits (8 ; 108 ; 208) dans des conteneurs de ramassage (12 ; 112; 212 ; 312), laquelle installation comprend un rayonnage de stockage (2; 102 ; 202; 302) comprenant des emplacements de rayonnage disposés à côté et au-dessus les uns des autres pour entreposer lesdits produits, aussi bien qu'un système de convoyage comprenant un convoyeur pour les paniers de ramassage qui s'étend le long d'un chemin de convoyage, ledit chemin de convoyage comprenant un chemin de convoyage principal (14 ; 114 ; 214 ; 314) et au moins un chemin de convoyage dérivé fixe (15 ; 16 ; 115 ; 116 ; 215 ; 216 ; 319) s'étendant depuis ledit chemin de convoyage principal, lequel chemin de convoyage dérivé comprend au moins un emplacement fixe de ramassage (11 ; 111 ; 211 ; 311) disposé à proximité du rayonnage de stockage pour le placement d'au moins un produit dans un panier de ramassage à l'emplacement de ramassage en provenance de plusieurs emplacements de rayonnage situés près dudit emplacement de ramassage, **caractérisée en ce que** ledit chemin de convoyage dérivé s'étend au moins en partie selon une direction verticale.

2. Installation destinée au ramassage de produits dans des paniers de ramassage, laquelle installation comprend un rayonnage de stockage comprenant des emplacements de rayonnage disposés à côté et au-dessus les uns des autres pour l'entreposage desdits paniers de ramassage, de même qu'un système de convoyage comprenant un convoyeur pour les produits qui peuvent être présents dans des conteneurs de distribution, ledit chemin de convoyage comprenant un chemin de convoyage principal et au moins un chemin de convoyage dérivé fixe s'étendant depuis ledit chemin de convoyage principal, lequel chemin de convoyage dérivé comprend au moins un emplacement fixe de distribution situé près du rayonnage de stockage pour le placement d'un produit en provenance du convoyeur dans l'un des multiples conteneurs de ramassage à l'emplacement de distribution, lesquels paniers de ramassage sont entreposés dans l'un des multiples emplacements de rayonnage au voisinage dudit emplacement de distribution, **caractérisée en ce que** ledit chemin de convoyage dérivé s'étend au moins partiellement selon une direction verticale.

3. Installation selon la revendication 1 ou 2, **caractérisée en ce que** le chemin de convoyage dérivé s'étend selon une direction verticale en direction de l'emplacement de ramassage ou de l'emplacement de distribution et y soit contigu.

4. Installation selon la revendication 1, 2 ou 3, **caractérisée en ce que** le chemin de convoyage dérivé s'étend selon une direction verticale à partir de l'emplacement de ramassage ou de l'emplacement de distribution et y soit contigu.

5. Installation selon l'une quelconque des revendications précédentes, **caractérisée en ce que** le chemin de convoyage principal s'étend au dessus ou en dessous des emplacements de rayonnage, au moins directement avant l'emplacement dans lequel le chemin de convoyage dérivé démarre.

6. Installation selon l'une quelconque des revendications précédentes, **caractérisée en ce que** le système de convoyage, ou au moins le chemin de convoyage principal de celui-ci, s'étend sous un plancher qui est contigu au rayonnage de stockage.

7. Installation selon l'une quelconque des revendications précédentes, **caractérisée en ce que** la longueur du système de convoyage, vu selon la direction longitudinale du rayonnage de stockage, est substantiellement égale à la dimension de deux paniers de ramassage ou de deux paniers de distribution adjacents, vus selon la direction longitudinale du rayonnage de stockage, au moins dans la mesure où le chemin de convoyage dérivé s'étend dans la limite de la hauteur commune des emplacements de rayonnage.

8. Installation selon l'une quelconque des revendications précédentes, **caractérisée en ce que** la longueur du système de convoyage, vu selon la direction longitudinale du rayonnage de stockage, est substantiellement égale à la dimension d'un conteneur de ramassage ou d'un conteneur de distribution isolés, vus selon la direction longitudinale du rayonnage de stockage, au moins dans la mesure où le chemin de convoyage dérivé s'étend dans la limite de la hauteur commune des emplacements de rayonnage.

9. Installation selon l'une quelconque des revendications précédentes, **caractérisée en ce que** le système de convoyage s'étend dans le plan des emplacements de rayonnage, au moins dans la mesure où le chemin de convoyage dérivé s'étend dans la limite de la hauteur commune des emplacements de rayonnage.

10. Installation selon l'une quelconque des revendications 1 à 8, **caractérisée en ce que** le système de convoyage est adjacent au plan des emplacements de rayonnage, au moins dans la mesure où le chemin de convoyage dérivé s'étend dans la limite de la hauteur commune des emplacements de rayonnage.

11. Installation selon l'une quelconque des revendications précédentes, **caractérisée en ce que** le chemin de convoyage dérivé se connecte à nouveau au chemin de convoyage principal en un point après l'emplacement de ramassage ou l'emplacement de distribution.

12. Installation selon l'une quelconque des revendications 1 à 10, **caractérisée en ce que** le chemin de convoyage dérivé se connecte à un autre chemin de convoyage principal en un point après l'emplacement de ramassage ou l'emplacement de distribution.

13. Installation selon l'une quelconque des revendications précédentes, **caractérisée en ce que** le chemin de convoyage dérivé comprend au moins deux chemins de convoyage dérivés secondaires, qui comprennent chacun un emplacement de ramassage ou un emplacement de distribution.

14. Installation selon la revendication 13, **caractérisée en ce que** lesdits chemins de convoyage dérivés secondaires s'étendent parallèlement les uns aux autres, au moins dans la mesure où ils se connectent aux emplacements de ramassage ou aux emplacements de distribution.

15. Installation selon l'une quelconque des revendications précédentes, **caractérisée en ce que** l'installation comprend un autre rayonnage de stockage opposé audit rayonnage de stockage, lequel autre rayonnage de stockage comprend des emplacements de rayonnage disposés à côté et au-dessus les uns des autres, soit pour placer un produit dans un conteneur de ramassage à l'emplacement de ramassage provenant desdits emplacements de l'autre rayonnage à proximité de l'emplacement de ramassage, soit pour placer un produit en provenance de l'emplacement de distribution dans un panier de ramassage entreposé dans un emplacement de l'autre rayonnage proche au voisinage de l'emplacement de distribution
